# EUROPÄISCHE PATENTANMELDUNG

(11) **EP 2 634 470 A2**
(43) Veröffentlichungstag der Anmeldung: **04.09.2013**
(21) Anmeldenummer: 13000847.7
(22) Anmeldetag: 20.02.2013
(51) Int. Cl.: F16P 3/14, G01V 8/20

(54) **Sicherungseinrichtung und Umformmaschine**

(30) Priorität: 02.03.2012 DE 102012004031
(71) Anmelder: Fiessler Elektronik GmbH & Co. KG, 73734 Esslingen (DE)
(72) Erfinder: Fiessler, Lutz Dr, D-73773 Aichwald (DE)
(74) Vertreter: Kocher, Mark Werner

(57) **Zusammenfassung**

Die Erfindung betrifft eine Sicherungseinrichtung für ein optisches Überwachungssystem (7), mit einem Grundkörper (11; 21), an dem wenigstens eine Hafteinrichtung (12; 22) für eine zeitweilige, werkzeuglos lösbare Anhaftung an einem Umformwerkzeug (6) ausgebildet ist und an dem wenigstens eine Sperreinrichtung zur Unterbrechung wenigstens eines Detektionsstrahls (14) des Überwachungssystems (7) ausgebildet ist. Erfindungsgemäß ist vorgesehen, dass am Grundkörper (11; 21) eine erhaben von der Hafteinrichtung (12; 22) und/oder von der Sperreinrichtung abragende Haltenase (15; 25) ausgebildet ist, die für eine zuverlässige Positionierung der Sicherungseinrichtung (10; 20) am Umformwerkzeug (6) vorgesehen ist.

## Beschreibung

Die Erfindung betrifft eine Sicherungseinrichtung für ein optisches Überwachungssystem, mit einem Grundkörper, an dem wenigstens eine Hafteinrichtung für eine zeitweilige, werkzeuglos lösbare Anhaftung an einem Umformwerkzeug ausgebildet ist und an dem wenigstens eine Sperreinrichtung zur Unterbrechung wenigstens eines Detektionsstrahls des Überwachungssystems ausgebildet ist. Ferner betrifft die Erfindung eine Umformmaschine.

Gemäß einem der Anmelderin bekannten, druckschriftlich nicht niedergelegten Stand der Technik werden bei Umformmaschinen, die mit optischen Überwachungssystemen ausgestattet sind, um während des Betriebs Verletzungen eines Bedieners aufgrund von Relativbewegungen von Werkzeugen zu verhindern, für Einstell-, Rüst- oder Wartungszwecke Sicherungseinrichtungen eingesetzt, die an das optische Überwachungssystem angepasst sind und mit denen ein vom Überwachungssystem überwachter Bereich kontrolliert deaktiviert werden kann, indem ein vom Überwachungssystem bereitgestellter Detektionsstrahl unterbrochen wird.

Die Aufgabe der Erfindung besteht darin, eine Sicherungseinrichtung und eine Umformmaschine bereitzustellen, die eine vereinfachte Handhabung aufweisen.

Gemäß einem ersten Aspekt wird diese Aufgabe für eine Sicherungseinrichtung der eingangs genannten Art mit den Merkmalen des Anspruchs 1 gelöst. Hierbei ist vorgesehen, dass am Grundköper eine erhaben von der Hafteinrichtung und/oder von der Sperreinrichtung abragende Haltenase ausgebildet ist, die für eine zuverlässige Positionierung der Sicherungseinrichtung am Umformwerkzeug vorgesehen ist.

Die Haltenase dient zur Stabilisierung der Anhaftung der Sicherungseinrichtung am Umformwerkzeug, was insbesondere bei der Einrichtung einer Umformmaschine von Bedeutung ist, wenn die Funktion des Überwachungssystems geprüft werden soll. Hierbei kann es vorgesehen sein, dass bei Annäherung der Werkzeuge der Umformmaschine geprüft wird, ob Detektionsstrahlen des Überwachungssystems zu einem erwarteten Zeitpunkt unterbrochen werden. Dies kann mit Hilfe der Sicherungseinrichtung durchgeführt werden, die die Detektionsstrahlen unterbricht. Sofern bereits vor dem erwarteten Zeitpunkt eine Unterbrechung des jeweiligen Detektionsstrahls erfolgt oder erst nach dem erwarteten Zeitpunkt, insbesondere nach Verstreichen eines vorgebbaren Zeitintervalls, keine Unterbrechung des jeweiligen Detektionsstrahls erfolgt ist, wird von einer Fehlfunktion des Überwachungssystems ausgegangen und es erfolgt beispielsweise eine Abschaltung einer Antriebseinrichtung der Umformmaschine kann. Um die Blockierung des jeweiligen Detektionsstrahls an einem für den Betrieb der Umformmaschine sinnvollen Ort zu bewirken, beispielsweise bei einem vorgebbaren Abstand der sich gegenüberliegenden und zur Deformation des Werkstücks vorgesehenen Umformwerkzeuge, wird die Sicherungseinrichtung eingesetzt. Da bei einer derartigen Überprüfung des Überwachungssystems aufgrund von äußeren Einflüssen wie Vibrationen der Umformmaschine die Gefahr besteht, dass die Sicherungseinrichtung vom ursprünglich festgelegten Ort am Umformwerkzeug derart verschoben wird, dass die gewünschte Blockierung des wenigstens einen Detektionsstrahls nicht mehr gewährleistet ist, wird durch die erfindungsgemäße Haltenase eine verbesserte Positionierung der Sicherungseinrichtung am Umformwerkzeug gewährleistet.

Vorteilhafte Weiterbildungen der Erfindung sind in den Unteransprüchen angegeben.

Zweckmäßig ist es, wenn die Hafteinrichtung zur Bereitstellung von Magnetkräften und/oder von Unterdruckkräften und/oder von van der Waals-Kräften ausgebildet ist. Hiermit kann eine zuverlässige Festlegung sowie eine einfache werkzeuglose Entfernung der Sicherungseinrichtung am bzw. vom Umformwerkzeug sichergestellt werden. Ferner ist je nach angewendetem Hafteffekt auch eine Nutzung der Sicherungseinrichtung unter ungünstigen Umgebungsbedingungen, beispielsweise bei verschmutzten Oberflächen des Umformwerkzeugs, gewährleistet.

Vorzugsweise ist vorgesehen, dass die Hafteinrichtung als Folie ausgebildet ist, die auf den Grundkörper aufgebracht ist. Hierdurch kann eine besonders kostengünstige Herstellung der Sicherungseinrichtung und gegebenenfalls auch ein einfacher Austausch der Hafteinrichtung gewährleistet werden.

Bei einer Ausgestaltung der Erfindung ist vorgesehen, dass die Haltenase geometrisch an einen Gesamtquerschnitt oder einen Querschnittsbereich des Umformwerkzeugs angepasst ist. Somit kann die Haltenase zumindest in einer Kraftrichtung formschlüssig am Umformwerkzeug festgelegt werden. Bevorzugt ist die Haltenase derart ausgebildet, dass zumindest eine formschlüssige Festlegung am Umformwerkzeug gegenüber der in vertikaler Richtung nach unten wirkenden Gewichtskraft und gegenüber weiteren in dieser Richtung auf die Sicherungseinrichtung einwirkenden Kräften gewährleistet ist. Besonders bevorzugt ist die Haltenase für eine kraftschlüssige Festlegung am Umformwerkzeug gegenüber Kräften ausgebildet, die in unterschiedlichen Richtungen auf die Sicherungseinrichtung einwirken und einen, insbesondere spitzen, Winkel zueinander einschließen. Hierdurch kann eine Verschiebung der Sicherungseinrichtung bei Einwirkung von äußeren Kräften mit höherer Wahrscheinlichkeit verhindert werden. Exemplarisch kann die Haltenase derart ausgebildet sein, dass sie zumindest abschnittsweise ein Negativ zu einem Querschnitt des Umformwerkzeugs bildet und somit besonders zuverlässig am Umformwerkzeug festgelegt werden kann.

Vorteilhaft ist es, wenn die Haltenase wenigstens eine Anlagefläche aufweist, die an eine Außenoberfläche des Umformwerkzeugs angepasst ist. Hierdurch wird eine universelle Einsatzbarkeit der Sicherungseinrichtung begünstigt, da die meisten Umformwerkzeuge beispielsweise wenigstens eine, als Planfläche ausgebildete Außenoberfläche aufweisen.

Bei einer vorteilhaften Weiterbildung der Erfindung ist vorgesehen, dass die Hafteinrichtung die Sperreinrichtung umfasst. Exemplarisch kann vorgesehen sein, dass die Hafteinrichtung als für den wenigstens einen Detektionsstrahl des Überwachungssystems undurchlässige, insbesondere lichtundurchlässige, Haftfläche ausgebildet ist, die somit in einer Doppelfunktion auch die Sperreinrichtung bildet.

Gemäß einem zweiten Aspekt wird die Aufgabe der Erfindung durch eine Umformmaschine gemäß Anspruch 7 gelöst. Dabei umfasst die erfindungsgemäße Umformmaschine zwei längs einer Bewegungsachse relativbeweglich zueinander bewegliche Werkzeuge und ein optisches Überwachungssystem, das für eine Überwachung wenigstens eines quer zur Bewegungsachse ausgerichteten, entlang einer längsten Kante eines Werkzeugs verlaufenden Sicherheitsbereichs ausgebildet ist, sowie eine Steuereinrichtung, die mit dem Überwachungssystem gekoppelt ist und die zur Ansteuerung eines Antriebsmittels ausgebildet ist, das zur Einleitung einer Bewegung auf wenigstens eines der Werkzeuge dient, wobei an einem Endbereich eines der Werkzeuge eine Sicherungseinrichtung nach einem der Ansprüche 1 bis 6 angeordnet ist, die für eine wahlweise Unterbrechung des wenigstens einen Detektionsstrahls des Überwachungssystems ausgebildet ist.

Bei der Umformmaschine handelt es sich exemplarisch um eine Gesenkbiegemaschine, bei der ein Stempel ein Werkstück zumindest teilweise in eine Matrize eindrückt. Dabei weisen der Stempel und die Matrize zueinander korrespondierende Querschnitte auf, die vorzugsweise längs einer längsten Kante des Stempels bzw. der Matrize konstant sind. Die Sicherungseinrichtung ist zur zeitweiligen Unterbrechung des wenigstens einen Detektionsstrahls des optischen Überwachungssystems ausgebildet, der vorzugsweise parallel zur längsten Kante der Matrize in einer nutartigen Vertiefung der Matrize verläuft.

Vorteilhafte Ausführungsformen der Erfindung sind in der Zeichnung dargestellt. Dabei zeigt:
- Figur 1: eine schematische Darstellung einer Gesenkbiegemaschine mit einem Überwachungssystem und einer endseitig an einer Matrize angebrachten Sicherungseinrichtung,
- Figur 2: eine Vorderansicht der Sicherungseinrichtung gemäß Figur 1,
- Figur 3: eine Vorderansicht einer weiteren Ausführungsform einer Sicherungseinrichtung und
- Figur 4: eine Seitenansicht der Sicherungseinrichtung gemäß Figur 3.

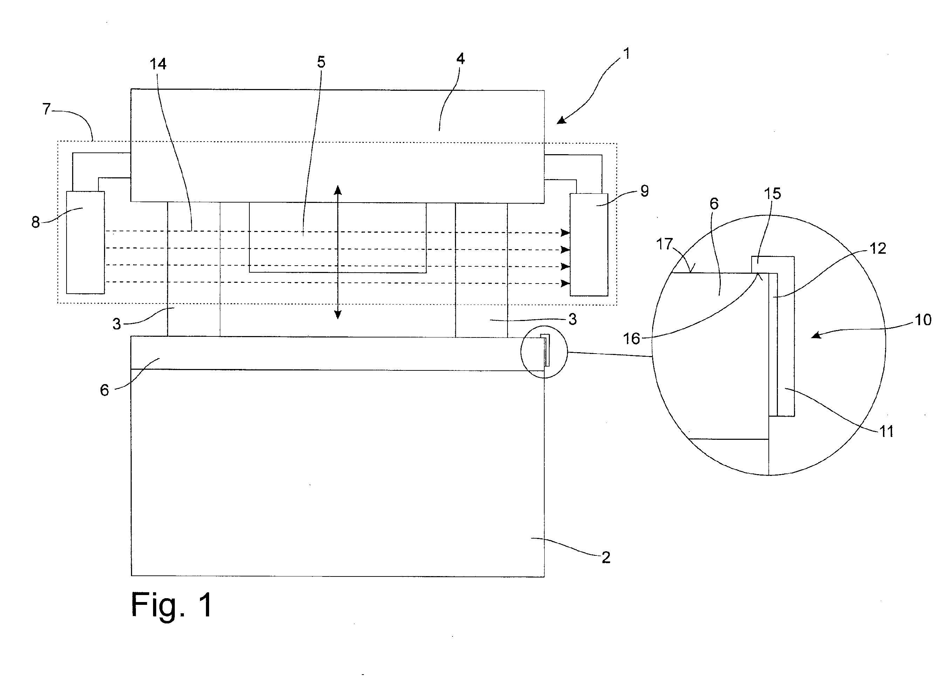

Eine gemäß der Figur 1 exemplarisch als Gesenkbiegemaschine 1 ausgebildete Umformmaschine umfasst ein Maschinenbett 2, an dem zwei Führungsstangen 3 angebracht sind, die für eine linearbewegliche Lagerung eines Werkzeugträgers 4 ausgebildet sind. Der Werkzeugträger 4 kann mittels einer nicht näher dargestellten Antriebseinrichtung längs der Führungsstangen 3 bewegt werden, um einen Stempel 5 gegenüber einer Matrize 6 zu bewegen und damit eine Deformation eines nicht dargestellten, in den Spalt zwischen Stempel 5 und Matrize 6 einschiebbaren Werkstücks zu ermöglichen. Die Gesenkbiegemaschine 1 ist mit einem exemplarisch aus mehreren Komponenten aufgebauten Überwachungssystem 7 ausgestattet, das dazu vorgesehen ist, die Verletzungsgefahr durch die Gesenkbiegemaschine 1 zu minimieren. Exemplarisch umfasst das Überwachungssystem 7 ein am Werkzeugträger 4 angebrachtes Lichtgitter 8, 9, dessen nicht eingezeichnete, als Detektionsstrahlen 14 dienende Lichtstrahlen parallel zu einer längsten Kante der Matrize 6 ausgerichtet sind und der zwischen einem Sender 8 und einem Empfänger 9 verlaufen. Der Empfänger 9 des Überwachungssystems 7 stellt jeweils elektrische Schaltsignale bereit, die angeben, ob nur diejenigen Detektionsstrahlen 14 des Lichtgitters unterbrochen sind, von denen aufgrund der jeweiligen Stellung des Werkzeugträgers 4 gegenüber der Matrize 6 zu erwarten ist, dass sie unterbrochen sind, oder ob zusätzliche Detektionsstrahlen 14 des Lichtgitters unterbrochen sind oder nicht. Diese Schaltsignale werden in einer nicht näher dargestellten Steuereinrichtung für die Gesenkbiegemaschine 1 verarbeitet und können beispielsweise dazu führen, dass die Antriebseinrichtung für den Werkzeugträger 4 im Gefahrenfall abgeschaltet wird.

Für die Überprüfung des Überwachungssystems 7 an der Gesenkbiegemaschine 1 kann es erforderlich sein, den wenigstens einen Detektionsstrahl 14 der Lichtschranke 8, 9 zeitweilig zu unterbrechen. Hierzu wird eine Sicherungseinrichtung 10 eingesetzt, die an einer Stirnseite der Matrize 6 angebracht wird und die den Detektionsstrahl des Überwachungssystems 7 bei einer Annäherung des Stempels 5 an die Matrize 6 an einem definierten Ort unterbricht.

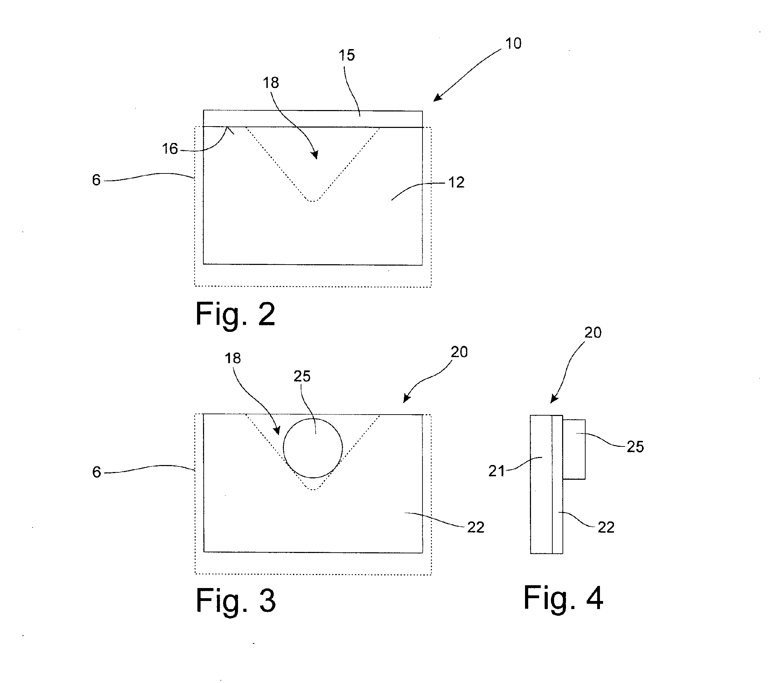

Wie aus der Detailvergrößerung der Figur 1 und aus der Figur 2 hervorgeht, umfasst die Sicherungseinrichtung 10 einen Grundkörper 11, an dem wenigstens eine exemplarisch als separate Magnetfolie ausgebildete Hafteinrichtung 12 für eine zeitweilige, werkzeuglos lösbare Anhaftung an der Matrize 6 angeordnet ist. Somit kann die Sicherungseinrichtung 10 in einfacher Weise an der typischerweise aus Stahl hergestellten Matrize 6 angehaftet werden. Der Grundkörper 11 und die Hafteinrichtung 12 sind aus einem lichtundurchlässigen Material hergestellt, so dass sie auch eine Sperreinrichtung für den wenigstens einen Detektionsstrahl 14 bilden.

Ferner ist an dem Grundkörper 11 eine erhaben von der Hafteinrichtung 12 abragende Haltenase 15 ausgebildet, die exemplarisch für eine formschlüssige Festlegung der Sicherungseinrichtung 10 gegenüber den in vertikaler Richtung nach unten auf die Sicherungseinrichtung 10 einwirkenden Gewichtskräften ausgebildet ist. Zudem gewährleistet die Haltenase 15 auch bei Auflegen eines Werkstücks auf die Matrize 6, dass die Sicherungseinrichtung 10 nicht nach unten verschoben wird, wenn das Werkstück auch auf der Sicherungseinrichtung 10 aufgelegt wird.

Die Haltenase 15 der in den Figuren 1 und 2 dargestellten Sicherungseinrichtung 10 ist derart ausgebildet, dass sie eine exemplarisch eben ausgebildete Anlagefläche 16 aufweist, die an eine exemplarisch ebenfalls zumindest abschnittsweise eben ausgebildete Außenoberfläche 17 der Matrize 6 angepasst ist. Durch die korrespondierende Gestaltung der aneinander anliegenden Flächen kann eine ausreichend exakte Ausrichtung der Sicherungseinrichtung 10 gegenüber der Matrize 6 gewährleistet werden, so dass der wenigstens eine Detektionsstrahl zuverlässig unterbrochen wird.

Anstelle der als Magnetfolie ausgebildeten Hafteinrichtung 12 kann auch eine direkte Magnetisierung des Grundköpers 11 vorgesehen werden. Alternativ kann die Hafteinrichtung als Anordnung von Saugnäpfen ausgebildet sein, die für eine Saughaftung an der Matrize 6 vorgesehen sind. In einer weiteren Alternative kann die Hafteinrichtung auch als Folie mit mikrostrukturierten Haftstempeln ausgebildet sein, die für eine Ausbildung von van-der-Waals-Kräften (auch als Gecko-Effekt bekannt) vorgesehen sind und die eine zuverlässige Anhaftung auch an verunreinigten Oberflächen ermöglicht.

Die in den Figuren 3 und 4 dargestellte weitere Ausführungsform einer Sicherungseinrichtung 20 unterscheidet sich von der Ausführungsform gemäß den Figuren 1 und 2 dadurch, dass der Grundköper 21 als ebene Platte ausgebildet ist. Am Grundkörper 21 ist in gleicher Weise wie bei der Sicherungseinrichtung 10 gemäß den Figuren 1 und 2 an einer der beiden größten Oberflächen eine als Magnetfolie ausgebildete Hafteinrichtung 12 vorgesehen. Diese Hafteinrichtung 12 wird bereichsweise von einer exemplarisch als Zylinderabschnitt ausgebildeten Haltenase 25 durchsetzt, die für einen formschlüssigen Eingriff in die V-förmige, nutartige Vertiefung 18 in der Matrize 6 ausgebildet ist. Die Haltenase 25 kann durch Anlage an den beiden im spitzen Winkel zueinander ausgerichteten Seitenflächen der nutartigen Vertiefung 18 sowohl in vertikaler Richtung nach unten gerichtete Kräfte als auch seitwärts gerichtete Kräfte aufnehmen. Damit stellt die Haltenase 25 eine formschlüssige Verriegelung der Sicherungseinrichtung 20 in vertikaler Richtung und in seitliche Richtungen, die sich bis zu den Flächenormalen der Seitenflächen der nutartigen Vertiefung 18 erstrecken, sicher.

Andere Geometrien der Haltenase, die ebenfalls eine formschlüssige Verriegelung der Sicherungseinrichtung in wenigstens eine Raumrichtung gewährleisten, können ebenfalls vorgesehen sein.

## Patentansprüche

1. Sicherungseinrichtung für ein optisches Überwachungssystem (7), mit einem Grundkörper (11; 21), an dem wenigstens eine Hafteinrichtung (12; 22) für eine zeitweilige, werkzeuglos lösbare Anhaftung an einem Umformwerkzeug (6) ausgebildet ist und an dem wenigstens eine Sperreinrichtung zur Unterbrechung wenigstens eines Detektionsstrahls (14) des Überwachungssystems (7) ausgebildet ist, **dadurch gekennzeichnet, dass** am Grundkörper (11; 21) eine erhaben von der Hafteinrichtung (12; 22) und/oder von der Sperreinrichtung abragende Haltenase (15; 25) ausgebildet ist, die für eine zuverlässige Positionierung der Sicherungseinrichtung (10; 20) am Umformwerkzeug (6) vorgesehen ist.

2. Sicherungseinrichtung nach Anspruch 1, **dadurch gekennzeichnet, dass** die Hafteinrichtung (12; 22) zur Bereitstellung von Magnetkräften und/oder von Unterdruckkräften und/oder von van der Waals-Kräften ausgebildet ist.

3. Sicherungseinrichtung nach Anspruch 1 oder 2, **dadurch gekennzeichnet, dass** die Hafteinrichtung (12; 22) als Folie ausgebildet ist, die auf den Grundkörper (11; 21) aufgebracht ist.

4. Sicherungseinrichtung nach Anspruch 1, 2 oder 3, **dadurch gekennzeichnet, dass** die Haltenase (15; 25) geometrisch an einen Gesamtquerschnitt oder einen Querschnittsbereich des Umformwerkzeugs (6) angepasst ist.

5. Sicherungseinrichtung nach einem der vorhergehenden Ansprüche, **dadurch gekennzeichnet, dass** die Haltenase (15; 25) wenigstens eine Anlagefläche (16) aufweist, die an eine Außenoberfläche (17) des Umformwerkzeugs (6) angepasst ist.

6. Sicherungseinrichtung nach Anspruch 1, **dadurch gekennzeichnet, dass** die Hafteinrichtung (12; 22) die Sperreinrichtung umfasst.

7. Umformmaschine mit zwei längs einer Bewegungsachse relativbeweglich zueinander beweglichen Werkzeugen (5, 6) und mit einem optischen Überwachungssystem (7), das für eine Überwachung wenigstens eines quer zur Bewegungsachse ausgerichteten, längs eines Werkzeugs (5, 6) verlaufenden Sicherheitsbereichs ausgebildet ist, sowie mit einer Steuereinrichtung, die mit dem Überwachungssystem (7) gekoppelt ist und die zur Ansteuerung eines Antriebsmittels ausgebildet ist, das zur Einleitung einer Bewegung auf wenigstens eines der Werkzeuge (5, 6) dient, **dadurch gekennzeichnet, dass** an einem Endbereich eines der Werkzeuge (5, 6) eine Sicherungseinrichtung (10; 20) nach einem der vorhergehenden Ansprüche angeordnet ist, die für eine wahlweise Unterbrechung wenigstens eines Detektionsstrahls (14) des Überwachungssystems (7) ausgebildet ist.
